# EUROPEAN PATENT APPLICATION

(11) **EP 4 810 220 A2**
(43) Date of publication of application: **23.09.2026**
(21) Application number: 26196821.8
(22) Date of filing: 20.12.2023
(51) Int. Cl.: B29C 43/00

(54) **METHOD AND APPARATUS FOR FORMING AN OBJECT WITH A NATURAL FIBRE-BASED SUBSTANCE**

(30) Priority: 23.12.2022 IT 202200026688
(62) Document number(s) of the earlier application(s) in accordance with Art. 76 EPC: 23844121.6 / 4 638 082
(71) Applicant: SACMI Cooperativa Meccanici Imola Società Cooperativa, 40026 Imola (BO) (IT)
(72) Inventor: PARRINELLO, Fiorenzo, 40026 Imola (BOLOGNA) (IT); PUCCI, Fabrizio, 40026 Imola (BOLOGNA) (IT); ZANOTTI, Davide, 40026 Imola (BOLOGNA) (IT); ZAMA, Marcello, 40026 Imola (BOLOGNA) (IT); MAZZOTTI, Giovanni, 40026 Imola (BOLOGNA) (IT); PIRAZZOLI, Francesco, 40026 Imola (BOLOGNA) (IT)
(74) Representative: Bugnion SI1

(57) **Abstract**

A method is intended for forming an object (10) in a mould by compressing a dose (9; 309) made with a natural fibre-based substance. The mould comprises a male half-mould and a female half-mould (144; 244; 344) which includes a cavity (60; 360), at least one half-mould selected from the female half-mould (144; 244; 344) and the male half-mould being movable along a moulding direction (D1) relative to the other half-mould selected from the male half-mould and the female half-mould (144; 244; 344). The method comprises the steps of inserting the dose (9; 309) into the mould and compressing the dose (9; 309) to form the object (10), wherein the step of inserting the dose (9; 309) into the mould comprises positioning the dose (9; 309) in a receiving space (57) over the cavity (60; 360), so that the dose (9; 309) rests on a contact surface (58) which delimits the bottom of the receiving space (57) and is at a distance from a bottom surface (61) of the cavity (60; 360). The mould further comprises a containment device which laterally delimits the receiving space (57), wherein the containment device comprises a plurality of movable parts which move transversally to the moulding direction (D1) for pushing the dose (9; 309) towards a central zone of the mould.

## Description

The invention relates to a method and an apparatus for forming an object with a natural fibre-based substance, in particular a cellulose-based substance.

For reasons linked to environmental protection, the use of natural and renewable materials is desirable, for example cellulose-based materials, for making many objects currently made of synthetic polymeric material, in particular but not exclusively in the packaging sector. In fact, cellulose-based materials are much less polluting and easier to dispose of than synthetic polymeric materials.

A forming apparatus is known for forming cellulose products from a dose of cellulose. The apparatus comprises a moulding carousel having a plurality of moulds, each of which includes a first half-mould and a second half-mould which are movable relative to each other along a moulding direction. The doses, which are made in a dedicated production line, separate from the prior art apparatus, are sent to the moulding carousel and a dose is inserted into each mould.

It is also possible to feed the prior art forming apparatus with a cellulose web. In this case, the doses are separated from the web using cutting edges mounted on the first half-mould and/or on the second half-mould. When the first half-mould and the second half-mould are moved towards each other to form the object, the cutting edges interact with the cellulose web separating the dose therefrom. The dose is immediately pressed between the first half-mould and the second half-mould to form the object. The structure and operation of the forming apparatus described above are complex due to the cellulose web which has to pass through the moulding carousel and in particular has to be inserted between the first half-mould and the second half-mould in order to cut the dose from the cellulose web. In addition, removing from the moulding carousel the residual cellulose web, from which the doses were cut, is not a simple operation, especially if the production speed is high.

When the mould is fed with a dose, it may happen that the dose is displaced in an unwanted way while the mould is closing. For example, the dose may be displaced transversally to the moulding direction. In particular, the dose may be positioned in a position which is not centred relative to an axis of the mould. In these cases, the flow of the natural fibre-based substance during moulding is not uniform inside the mould, which may cause defects on the moulded object.

Some examples of known apparatuses for making objects with natural fibre-based materials are disclosed in US 2015/247286, SE 1950299, US 2021/380287.

An object of the invention is to improve the methods and the apparatuses for making objects with a natural fibre-based substance, in particular cellulose-based.

Another object is to provide a forming apparatus for making objects with a natural fibre-based substance, in particular a cellulose-based substance, starting from a sheet material, in which the waste natural fibre-based substance can easily be removed.

A further object is to provide a forming apparatus for making objects with a natural fibre-based substance, in particular a cellulose-based substance, which comprises one or more moulds having a simple structure.

A further object is to provide a forming apparatus for making objects with a natural fibre-based substance, in particular a cellulose-based substance, which comprises one or more moulds which are easy to maintain. Another object is to provide a mould which is capable of making a good quality object by pressing a dose made with a natural fibre-based substance, in particular a cellulose-based substance.

Yet another object is to provide a mould for making an object by pressing a dose made with a natural fibre-based substance, in particular a cellulose-based substance, in which the risk of the dose being incorrectly positioned while the mould is being closed is reduced.

In a first aspect of the invention, there is provided a method for forming an object in a forming apparatus, wherein a natural fibre-based substance in the form of a sheet material enters the forming apparatus through an inlet and wherein an object made with the natural fibre-based substance exits the forming apparatus through an outlet, a path connecting the inlet and the outlet, wherein the sheet material is cut in a cutting unit located along said path, in order to separate a dose of natural fibre-based substance from the sheet material, and wherein the object is formed by pressing the dose in a pressing unit positioned along said path downstream of the cutting unit.

Owing to the first aspect of the invention, it is possible to make objects with a natural fibre-based substance, for example cellulose, in a forming apparatus having a particularly simple structure.

Since the sheet material is cut in a cutting unit positioned upstream of the pressing unit, the natural fibre-based substance is brought into the mould already in the form of a dose. This therefore eliminates the disadvantages present in the known forming apparatuses, linked to the need to make a whole web of sheet material pass through the pressing unit and to remove a web of residual material from the pressing unit.

The doses are made in line with the pressing unit. In this way, it is no longer necessary to make the doses upstream of the forming apparatus, which avoids disadvantages linked to storage of the doses and conveying the doses outside the forming apparatus.

The cellulose-based substance with which the objects are made may be a low density substance, which is compressible, compactable and formable according to complex shapes. That makes it possible to obtain three-dimensional objects even having complex geometries, by pressing the sheet material. The pressing process allows an increase in the density of the natural fibre-based substance and allows even complex objects to be obtained, which are impossible to make by thermoforming.

In an embodiment, a three-dimensional object is formed in the pressing unit, by pressing the dose between a female half-mould and a male half-mould.

The female half-mould and the male half-mould are included in a mould of the forming unit.

In an embodiment, the cutting unit operates intermittently, whilst the pressing unit operates continuously.

In an embodiment, the cutting unit and the pressing unit both operate intermittently.

In an embodiment, the cutting unit and the pressing unit both operate continuously.

The pressing unit may comprise a plurality of moulds, or alternatively a single mould.

The moulds of the pressing unit may be movable along a trajectory, for example a closed loop trajectory.

The trajectory along which the moulds are movable may be circular.

The pressing unit may comprise a moulding carousel.

In an alternative embodiment, the moulds of the pressing unit may be movable along a trajectory which is not a closed loop. For example, the moulds of the pressing unit may be movable forward and backward along a linear or curvilinear trajectory.

In an alternative embodiment, the pressing unit may comprise a press having at least one mould arranged in a fixed position. The mould comprises a first half-mould and a second half-mould at least one of which is movable towards the other for pressing the dose.

In an embodiment, the sheet material may be a continuous sheet unwound from a reel.

In an alternative embodiment, the sheet material may be a discrete flat sheet.

In an embodiment, the sheet material may be unfolded from a storage structure in which the sheet material is folded forward and backward on itself multiple times.

In an embodiment, the sheet material from which the doses are cut is a material having a reduced density compared with a starting material, which is fed to the forming apparatus.

In particular, the starting material may be a compact material, that is to say, a material having a relatively high density.

The starting material may be fed from a reel.

Upstream of the cutting unit a defibration unit may be provided, for breaking the natural fibre-based substance into fibres.

Downstream of the defibration unit, a compacting unit may be provided for compacting the fibres coming out of the defibration unit, thereby forming a sheet material having a density lower than that of the starting material. The sheet material is in this case a dry-formed material, which may also be called "airlaid".

In a second aspect of the invention, there is provided a forming apparatus for forming an object with a natural fibre-based substance, comprising an inlet for the natural fibre-based substance in the form of a sheet material, an outlet for the object made with the natural fibre-based substance, wherein a path connects the inlet and the outlet, the forming apparatus further comprising a cutting unit located along said path for cutting the sheet material in order to separate from the sheet material a dose of natural fibre-based substance, a pressing unit being arranged along said path downstream of the cutting unit for forming the object by pressing the dose.

Owing to the second aspect of the invention, it is possible to obtain the technical effects previously described with reference to the first aspect of the invention.

In a third aspect of the invention, there is provided a method for forming an object in a mould by compressing a dose made with a natural fibre-based substance, the mould comprising a male half-mould and a female half-mould which includes a cavity, at least one half-mould selected from the female half-mould and the male half-mould being movable along a moulding direction relative to the other half-mould selected from the male half-mould and the female half-mould, the method comprising the steps of inserting the dose into the mould and pressing the dose to form the object, wherein the step of inserting the dose into the mould comprises positioning the dose in a receiving space over the cavity, so that the dose rests on a contact surface which delimits the bottom of the receiving space and is at a distance from a bottom surface of the cavity, the mould also comprising a containment device which laterally delimits the receiving space, wherein the containment device comprises a plurality of movable parts which move transversally to the moulding direction for pushing the dose towards a central zone of the mould.

Owing to the third aspect of the invention, it is possible to improve the positioning of the dose inside the mould, reducing the risks of the dose being positioned in a way that is not centred in the cavity. This allows the defects on the finished object to be limited and consequently increases its quality.

In an embodiment, the movable parts of said plurality move towards the central zone of the mould after the dose has come to rest on the contact surface, so that the dose is centred in the cavity.

The containment device may comprise a plurality of containment elements, each of which defines a movable part of the plurality of movable parts.

The containment elements act like centring elements for centring the dose in the cavity. If the dose is positioned on the contact surface which delimits the bottom of the receiving space in a way that is not centred, that is to say, in such a way that a theoretical axis of the dose, positioned parallel to the moulding direction, does not coincide with a theoretical axis of the cavity, the centring elements move in a coordinated way towards the central zone of the mould and shift the dose making its theoretical axis substantially coincide with that of the cavity.

In an embodiment, the movable parts of said plurality of movable parts are included in the female half-mould and are movable transversally to the moulding direction for reducing the volume of a variable-volume forming region defined in the cavity.

The movable parts included in the female half-mould may comprise a plurality of sectors movable transversally to the moulding direction, which laterally delimit the cavity.

In this case the containment device may comprise a plurality of containment elements which are fixed relative to the movable parts of the first half-mould, that is to say, relative to the sectors.

In this way, the containment elements perform a centring function on the dose received in the receiving space, whilst the movable parts of the female half-mould allow the dose to be uniformly compressed during the moulding.

In a fourth aspect of the invention, there is provided a mould for forming an object by compressing a dose made with a natural fibre-based substance, the mould comprising a male half-mould and a female half-mould which includes a cavity, the female half-mould and the male half-mould being movable relative to each other along a moulding direction, wherein a receiving space is defined over the cavity for receiving the dose, the mould also comprising a containment device which laterally delimits the receiving space, the bottom of the receiving space being delimited by a contact surface which is intended to receive the dose resting on it and is at a distance from a bottom surface of the cavity, wherein the containment device comprises a plurality of movable parts, which are shiftable transversally to the moulding direction for pushing the dose towards a central zone of the mould.

The mould according to the fourth aspect of the invention allows the obtainment of the technical effects previously described with reference to the method according to the third aspect of the invention.

The invention can be better understood and implemented with reference to the accompanying drawings, which show several example, non-limiting embodiments of it, in which:
Figure 1 is a schematic perspective view, showing a forming apparatus for forming an object with a natural fibre-based substance;
Figure 2 is a view like Figure 1, showing an alternative embodiment of a forming apparatus;
Figure 3 is a view like Figure 1, showing another alternative embodiment of a forming apparatus;
Figure 4 shows an enlarged detail of Figure 3;
Figure 5 is a schematic cross-section, showing a mould usable in the forming apparatuses of Figures 1 to 4, in an initial position in which a dose made with a natural fibre-based substance is received in the mould;
Figure 6 is a cross-section along the plane VI-VI of Figure 5, in which the dose is not illustrated;
Figure 7 is a cross-section like that of Figure 5, with the mould in an intermediate position;
Figure 8 is a cross-section like that of Figure 6, with the mould in the intermediate position;
Figure 9 is a cross-section like that of Figure 5, with the mould in a final position;
Figure 10 is a cross-section like that of Figure 6, with the mould in the final position;
Figure 11 is a schematic plan view, showing a female part of the mould of

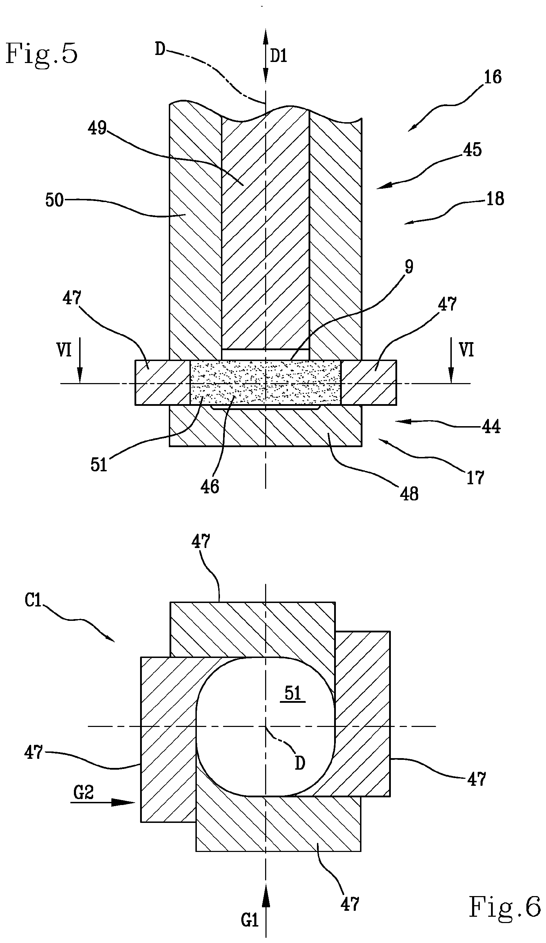

Figure 5, into which a dose has been inserted according to a first embodiment, in the initial position;

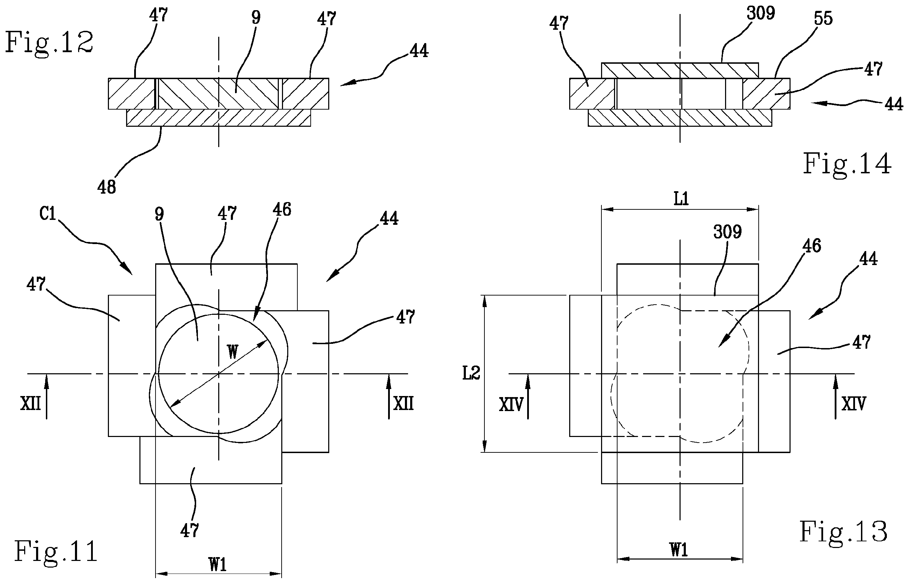

Figure 12 is a cross-section along the plane XII-XII of Figure 11;
Figure 13 is a schematic plan view, showing a female part of the mould of
Figure 5, into which a dose has been inserted according to a second embodiment, in the initial position;
Figure 14 is a cross-section along the plane XIV-XIV of Figure 13;

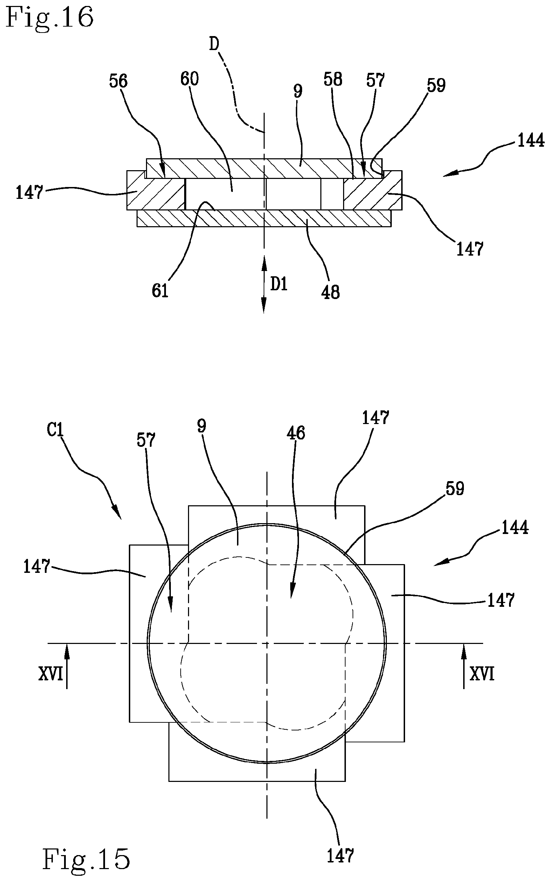

Figure 15 is a schematic plan view of a female mould part comprising a containment device for laterally containing the dose;
Figure 16 is a schematic cross-section along the plane XVI-XVI of Figure 15;

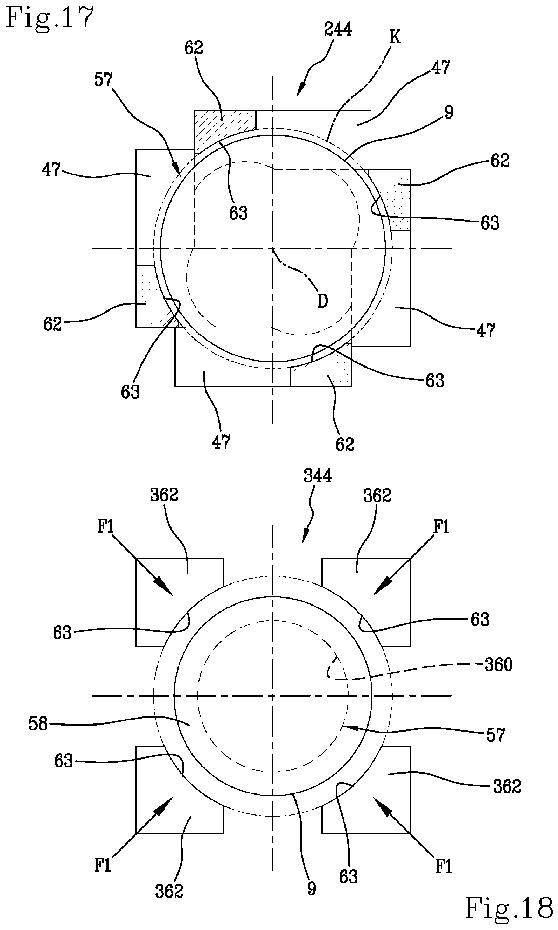

Figure 17 is a schematic plan view like that of Figure 15, showing a female mould part provided with a containment device according to an alternative embodiment;
Figure 18 is a schematic plan view like that of Figure 17, showing a female mould part provided with a containment device according to a further alternative embodiment.

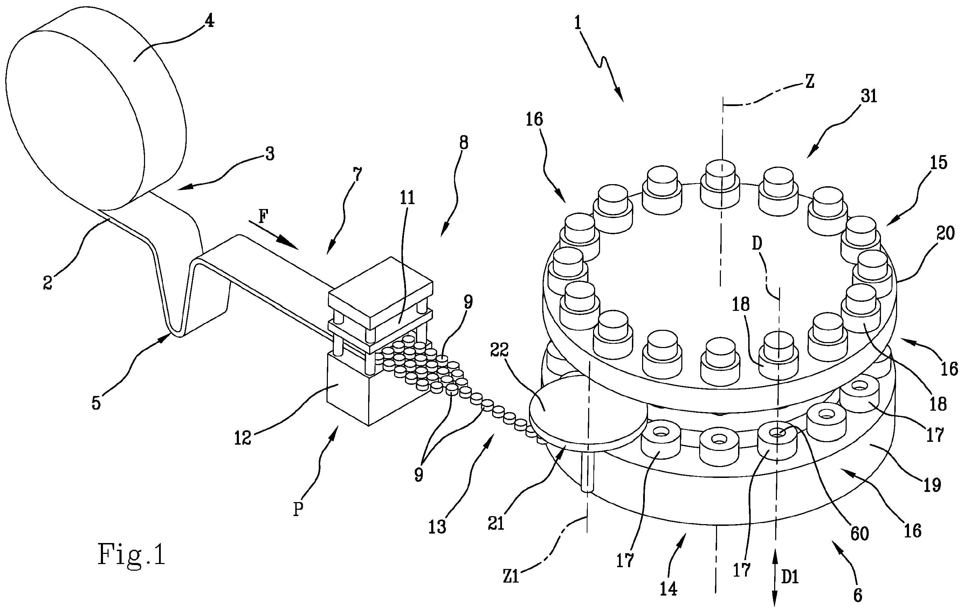

Figure 1 shows a forming apparatus 1 for forming an object starting with a sheet material 2.

The sheet material 2 is a material made with a natural fibre-based substance, optionally a cellulose-based substance.

In particular, the sheet material 2 may comprise a film in a substantially dry state, for example a so-called "airlaid" structure, or a structure having a consistency similar to a fluff.

That does not mean that the sheet material 2 must be completely dry. In fact, the sheet material 2 may comprise a limited percent of moisture. More specifically, the moisture content of the sheet material 2 may be less than or equal to 30% by weight.

In an embodiment, the sheet material 2 is composed of a substance comprising a quantity of cellulose greater than or equal to 70% by weight. In an embodiment, the quantity of cellulose present in the sheet material 2 may be greater than or equal to 80% by weight.

The remaining quantity of the natural fibre-based substance of which the sheet material 2 is made may comprise, for example, additives intended to give the object predetermined properties, or synthetic polymers.

The sheet material 2 may have a multi-layer structure. In particular, the sheet material 2 may comprise a thicker central layer interposed between two thinner outer layers. Both the central layer and the outer layers may be made mainly of natural fibre-based materials, specifically cellulose. The outer layers may optionally be more glossy than the central layer. The outer layers allow improvement of the appearance of the object which will be formed from the sheet material 2 and they reduce the risk of breaking or damaging the sheet material 2 while the latter is processed.

The outer layers may be glued to the central layer or simply kept in contact with the central layer without interposing adhesives.

It is also possible for the sheet material 2 to have a multi-layer structure, comprising a thicker layer coupled to a thinner layer.

In this case too, the thicker layer may be glued to the thinner layer or simply positioned in contact with the thinner layer, without using adhesive substances.

To render the outer layers or the thinner layer fixed relative to the central layer or relative to the thicker layer, it is possible to use a calendering device.

The objects which are made in the forming apparatus 1 may be packaging components, such as for example caps, lids, capsules, containers, cutlery or others. It is also possible to use the forming apparatus 1 to make objects intended for sectors other than packaging. The objects made in the forming apparatus 1 may have a concave shape, a flat shape or a generic three-dimensional shape.

The sheet material 2 enters the forming apparatus 1 through an inlet 3.

In the example shown, the sheet material 2 is initially wound on a reel 4. The sheet material 2 can be unwound from the reel 4 by an unwinding device, comprising for example a pair of unwinding rollers not shown, which are optionally positioned in a loop 5 formed by the sheet material 2 unwound from the reel 4.

In this case the inlet 3 is defined in a zone of the forming apparatus 1 in which the sheet material 2, after being unwound from the reel 4, begins to advance inside the forming apparatus 1.

In the forming apparatus 1 it is also possible to define an outlet 6 through which the objects which have been formed inside the forming apparatus 1 can leave the latter. For example, the outlet 6 may be defined at an outfeed conveyor not shown, which moves the objects formed away from the forming apparatus 1.

The inlet 3 and the outlet 6 are connected to each other by a path 7 along which the natural fibre-based substance moves to pass from the inlet 3 to the outlet 6.

More specifically, the natural fibre-based substance moves along the path 7 along an advancement direction F, which may vary in different zones of the path 7.

In the example shown, the path 7 comprises a first straight part, followed by a second curvilinear part, in particular having the shape of an arc of a circle. However, other geometries of the path 7 are possible.

The forming apparatus 1 comprises a cutting unit 8 positioned along the path 7 in a cutting position P.

The cutting unit 8 is configured to cut from the sheet material 2 a plurality of doses 9 each of which corresponds to an object to be formed, in the sense that one object is formed from each dose 9.

Each dose 9 may therefore be defined as a blank, that is to say, a semifinished product subsequently intended to be processed to obtain an object.

Each dose 9 consists of a dosed quantity of natural fibre-based substance. In other words, each dose 9 corresponds to a mass of natural fibre-based substance from which a single object can be formed.

In the example shown, each dose 9 has a cylindrical shape. More specifically, each dose 9 is shaped like a circular disk having a base diameter much greater than the height. However, this condition is not necessary and, in an embodiment not shown, the doses 9 may have a shape which is not cylindrical.

The cutting unit 8 may comprise a cutting block 11 operating in conjunction with a base 12.

In the example shown, the sheet material 2 is moved forward through the cutting unit 8 while the sheet material 2 lies in a substantially horizontal plane.

The cutting block 11 may be positioned over the base 12, but this condition is not necessary.

The cutting block 11 and the base 12 may be movable relative to each other along a direction arranged transversally, for example perpendicularly, relative to a plane in which the sheet material 2 lies. In the example shown, the cutting block 11 and the base 12 are movable relative to each other along a vertical direction. However, this condition is not necessary and, in an embodiment not shown, the cutting block 11 and the base 12 may be movable relative to each other along a non-vertical directions, depending on the orientation of the sheet material 2.

More precisely, the base 12 may be positioned in a fixed position, whilst the cutting block 11 may be movable towards, or alternatively away from, the base 12, for example along a vertical direction.

The cutting block 11 is provided with at least one cutting element, for example a blade, for cutting a dose 9 from the sheet material 2. The cutting element may comprise a cutting die.

In the example shown, the cutting block 11 is provided with a plurality of cutting elements, for simultaneously obtaining a plurality of doses 9 from the sheet material 2.

The base 12 may have one or more grooves in which the cutting elements of the cutting block 11 engage. Alternatively, the base 12 may have further cutting elements operating in conjunction with the cutting elements of the cutting block 11. It is also possible that the base 12 is delimited by a flat surface facing the cutting block 11, for example made with a yielding material, such as elastomeric material.

In the example shown, the cutting unit 8 simultaneously produces a plurality of doses 9 from the sheet material 2. For example, what is obtained from the sheet material 2 in a single cutting step is one or more lines comprising a plurality of doses 9, the lines being positioned perpendicularly to the advancement direction F. In the example shown, each time the cutting block 11 interacts with the sheet material 2, at least one line comprising four doses 9 is obtained, the line being positioned perpendicularly to the advancement direction F.

Downstream of the cutting unit 8, an aligning device not shown may be provided for aligning the doses 9, which belong to the same line, one after another in a single row 13 in which the doses 9 are arranged in sequence along the advancement direction F.

In an alternative embodiment not shown, it is possible to use a sheet material 2 having a width, measured perpendicularly to the advancement direction F, equal to or slightly greater than the diameter or transversal dimension of a dose 9. In this case, the doses 9 which are cut by the cutting block 11 are already arranged in a single row 13 along the advancement direction F.

The forming apparatus 1 further comprises a removing device not shown, for moving away from the cutting unit 8 the residual sheet material, that is to say, the sheet material 2 waste, that is to say, the sheet material from which the doses 9 were removed. In the example shown, the residual sheet material comprises a web of sheet material having a plurality of holes. At each hole, a dose 9 was separated from the sheet material 2. The removing device may comprise a winding element, for example a roller, for winding the residual sheet material on an empty reel not shown. A pressing unit 14 is positioned downstream of the cutting unit 8. In the example shown, the pressing unit 14 is configured like a moulding carousel 15. The moulding carousel 15 may be rotatable around an axis of rotation Z which in the example shown is positioned vertically. However, this condition is not necessary and, in an alternatively embodiment, the moulding carousel 15 may be rotatable around an axis of rotation positioned horizontally or positioned according to an oblique orientation. The pressing unit 14 is arranged in a position interposed between the cutting unit 8 and the outlet 6.

The pressing unit 14 comprises a plurality of moulds 16, each of which includes a first half-mould 17 and a second half-mould 18, aligned with each other along a moulding axis D, which in Figure 1 is only shown for one mould 16. The moulding axis D may be arranged vertically, but this condition is not necessary.

The moulding axis D is an axis which passes through a central zone of an object which will be formed by the first half-mould 17 interacting with the second half-mould 18. That does not imply that the object formed is axisymmetric.

In the example shown, the first half-mould 17 is a lower half-mould, whilst the second half-mould 18 is an upper half-mould, arranged above the first half-mould 17.

In the example shown, the first half-mould 17 is a female half-mould and comprises a cavity 60 in which a dose 9 can be received. The second half-mould 18 is a male half-mould and comprises a punch suitable for penetrating the cavity 60 for pressing the dose 9 and obtaining the object. In an alternative embodiment not shown, the first half-mould 17 may be a male half-mould positioned under the second half-mould 18, which in this case is a female half-mould. In this embodiment, the dose 9 may be released on the male half-mould.

The first half-mould 17 and the second half-mould 18 may be moved towards each other for pressing the dose 9 or moved away from each other along a moulding direction D1 parallel to the moulding axis D, for removing from the mould a formed object and for allowing a new dose 9 to be inserted between the first half-mould 17 and the second half-mould 18. For that purpose, the pressing unit may comprise an actuating device which may be for example a hydraulic, pneumatic or electric actuator. It is also possible to provide a mechanical actuator, for example a cam.

The actuating device may be associated with the first half-mould 17, which is moved along the moulding direction D1 while the second half-mould 18 remains in a fixed position along the moulding direction D1. Alternatively, the actuating device may be associated with the second half-mould 18, which is moved along the moulding direction D1 while the first half-mould 17 is kept axially fixed. It is also possible for the actuating device to act both on the first half-mould 17 and on the second half-mould 18.

If the pressing unit 14 comprises a moulding carousel 15, the moulds 16 are mounted in a peripheral region of the moulding carousel 15, for example in positions which are angularly equidistant around the axis of rotation Z.

More specifically, the moulding carousel 15 may comprise a first support 19, for example having a circular shape, which supports the first half-moulds 17 and a second support 20, for example having a circular shape, which supports the second half-moulds 18. The first support 19 and the second support 20 may be fixed relative to each other, in such a way that each first half-mould 17 is aligned along the respective moulding direction D1 with the corresponding second half-mould 18.

If the pressing unit 14 comprises a moulding carousel 15, the moulds 16 are movable along a circular trajectory during rotation of the moulding carousel 15 around the axis of rotation Z.

While the moulds 16 move along the circular trajectory, each mould 16 passes from an open position to a closed position. In the open position, the first half-mould 17 and the second half-mould 18 are at a distance from each other, in such a way that it is possible to insert between the first half-mould 17 and the second half-mould 18 a dose 9 of natural fibre-based substance. The dose 9 may be released over the half-mould positioned in a lower position, for example over the first half-mould 17. In the open position, it is also possible to remove from the mould 16 an object just formed, for example which remained attached to the second half-mould 18.

The closed position may be defined as a forming position, since in the closed position the first half-mould 17 and the second half-mould 18 are close to each other and are configured in such a way that a forming chamber is defined between the first half-mould 17 and the second half-mould 18, the forming chamber having a shape corresponding to the shape of the object to be obtained.

In this way the object is formed by pressing or compression moulding the dose 9.

While pressing or compression moulding the natural fibre-based substance in the mould 16, pressures higher than 200 bar are applied on that substance. The natural fibre-based substance is heated until it reaches a temperature in the 150-200°C range. Heating of the natural fibre-based substance may occur in the mould 16 and/or upstream of the latter, in such a way that the natural fibre-based substance arrives in the mould 16 already at the desired temperature.

When the mould 16 has remained in the closed position for a time long enough to form the object, the first half-mould 17 and the second half-mould 18 are moved away from each other to bring the mould 16 into the open position.

In Figure 1 the moulds 16 are schematically shown, without showing the relative punches, and therefore it is not possible to distinguish between the moulds 16 in the closed position and those in the open position.

The pressing unit 15 defines a forming region 31 of the forming apparatus 1. In the example shown in Figure 1, in the forming region 31 there is a plurality of moulds 16, each of which comprises a first half-mould 17 and a second half-mould 18 aligned along the moulding direction D1 and movable relative to each other along the moulding direction D1 to form the object.

The cutting position P is at a distance from the forming region 31 and in particular is arranged upstream of the forming region 31 along the path 7.

In this way, it is possible to avoid interference between the cutting unit 8 and the pressing unit 14. In particular, the residual sheet material from which the doses 9 were separated can be moved away from the cutting unit 8 without interfering with the pressing unit 14.

In an embodiment not shown, the pressing unit 14 may comprise a plurality of moulds 16, similar to the moulds 16 shown in Figure 1, movable along a closed path having a shape which is not circular.

In another alternative embodiment, the pressing unit 14 may comprise a single mould 16 arranged in a fixed position.

The forming apparatus 1 also comprises a conveying device 21 for conveying the doses 9 coming from the cutting unit 8 towards the pressing unit 14.

The conveying unit 21 may be shaped like a conveying carousel 22, rotatable around an axis Z1 which may be parallel to the axis of rotation of the moulding carousel 15, for example vertical.

The conveying device 21 may comprise a plurality of conveying elements movable along a closed path. If the conveying device 21 comprises the conveying carousel 22, the conveying elements may be movable along a circular path.

Each conveying element is configured to receive a dose 9 which was separated from the sheet material 2 and to deliver the dose 9 to a mould 16. In particular, the conveying element is configured to be interposed between the first half-mould 17 and the second half-mould 18 in order to release the dose 9 in the mould 16.

During the conveying, the dose 9 may remain associated with the corresponding conveying element owing to mechanical means, pneumatic means or a combination of them.

During operation, the sheet material 2 is unwound from the reel 4 and enters the forming apparatus 1 through the inlet 3. The sheet material 2 is moved forward along the advancement direction F along the path 7 and reaches the cutting unit 8 located in the cutting position P. In particular, the sheet material 2 may be indexed along the path 7, in such a way as to stop in the cutting position P while the cutting unit 8 cuts the sheet material 2. In an alternative embodiment, the sheet material 2 may be advanced along the path P continuously.

The doses 9 created by the cutting unit 8 are delivered to the conveying device 21, for example after having been aligned in a single row 13. Simultaneously, the residual sheet material, from which the doses 9 were separated, is moved away from the cutting position P and wound on an empty reel, so that it can subsequently be disposed of.

Each conveying element of the conveying device 21 collects a dose 9 and conveys the dose 9 towards a corresponding mould 16. When the conveying element reaches a position in which the conveying element is interposed between the first half-mould 17 and the second half-mould 18, the conveying element releases the dose 9, which is consequently delivered to the mould 16. That may occur due to the effect of gravity, and/or owing to mechanical and/or pneumatic devices included in the conveying element. In the example shown, the conveying element releases the dose 9 into a cavity 60 underneath made in the first half-mould 17. In an alternative embodiment, the conveying element could release the dose 9 on an upper surface of a punch included in the first half-mould 17, if the latter were to comprise a male half-mould.

The dose 9 is inserted into the mould 16 while the mould 16 is in an open position. While the mould 16 is in the open position, it is also possible to remove from the mould 16 an object formed and to move the object away from the forming apparatus 1 through the outlet 6.

After having received the dose 9, the mould 16 is brought to the closed position so that the dose 9 can be shaped between the first half-mould 17 and the second half-mould 18 to obtain the desired object. After having formed the object, the mould 16 can be returned to the open position to extract the object formed and to receive a new dose 9.

In the forming apparatus 1 shown in Figure 1, the cutting unit 8 operates intermittently, since the sheet material 2 is indexed along the advancement direction F and the cutting elements of the cutting unit 8 interact with the sheet material 2 to cut the doses 9 while the sheet material 2 is stationary in the cutting position P.

In contrast, the pressing unit 14 operates continuously, since the moulding carousel 15 rotates continuously and, during the rotation of the moulding carousel 15, each mould 16 performs a forming cycle.

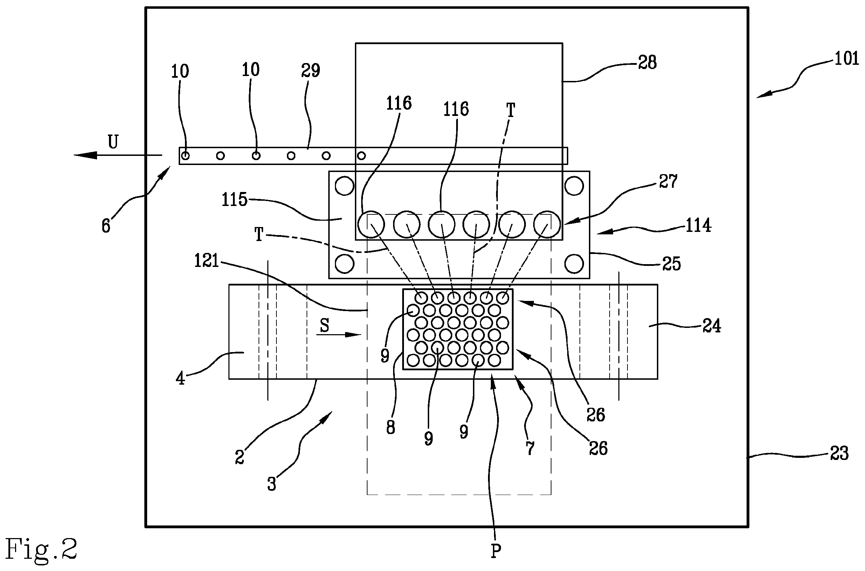

Figure 2 shows an alternative embodiment of a forming apparatus 101, in which the doses 9 are made by cutting the sheet material 2 intermittently and in which the objects are also formed intermittently.

In the embodiment in Figure 2, the components already described with reference to Figure 1 are indicated with the same reference numbers already used and are not described in detail again.

The apparatus 101 comprises an inlet 3 for the sheet material 2 and an outlet 6 for a plurality of objects 10 formed starting from the doses 9. The inlet 3 and the outlet 6 are connected by a path 7, which in the example shown comprises a plurality of straight stretches.

The apparatus 101 comprises a base 23 which supports the components of the apparatus 101.

Mounted on the apparatus 101 there may be a reel 4 on which the sheet material 2 is wound. An unwinding device not shown allows the sheet material 2 to be unwound from the reel 4, in such a way that the sheet material 2 passes through a cutting unit 8, positioned in a cutting position P along the path 7.

The sheet material is unwound along a feeding direction S.

The cutting unit 8 shown in Figure 2 is similar to the cutting unit 8 shown in Figure 1 and comprises a cutting block which supports a plurality of cutting elements for simultaneously obtaining a plurality of doses 9 on the sheet material 2. In the example shown, the cutting unit 8 is configured to obtain on the sheet material 2, in a single cutting operation, a plurality of rows 26 of doses 9. Each row 26 comprises a plurality of doses 9, for example six doses 9.

Each row 26 of doses 9 extends parallel to the feeding direction S.

The arrangement of the doses 9 in the rows 26 is selected in such a way as to minimise the sheet material 2 waste, that is to say, the residues of sheet material 2 which remain after cutting the doses 9.

For example, the doses 9 of one row 26 may be cut in such a way that each dose 9 has at least one point of contact with an adjacent dose 9 in the same row 26, or in any case in such a way that each dose 9 of a row 26 is as close as possible to the adjacent doses 9 of the same row 26. The rows 26 of doses 9 may be offset from each other, in such a way that a dose 9 of one row 26 is, in plan view, partly housed in a hollow defined between two consecutive dose 9 of an adjacent row 26.

This arrangement is particularly effective, for saving sheet material 2, when the doses 9 have a substantially circular shape in plan view, as in the example shown. There may be other arrangements for doses 9 having a shape in plan view that is different from the circular shape.

In one embodiment not shown, the cutting unit 8 may be configured to obtain a single row 26 of doses 9 from the sheet material 2. In this case, the sheet material 2 has a width, measured transversally to the feeding direction S, which is slightly greater than, or equal to, a transversal dimension of the dose 9, for example a diameter of the dose 9, seen in plan view.

After the doses 9 have been separated from the sheet material 2 in the cutting unit 8, the residual sheet material 2, on which a plurality of holes (not shown in Figure 2) remains in the positions in which the doses 9 were removed, is wound on an empty reel 24.

The apparatus 101 also comprises a pressing unit 114, positioned downstream of the cutting unit 8 along the path 7. The pressing unit 114 may comprise a press 115, which includes an upper plate 25 operating in conjunction with a lower plate not visible in Figure 2. The pressing unit 114 comprises at least one mould 116. In the example shown, the pressing unit 114 comprises a plurality of moulds 116, each of which includes a first half-mould fixed to the lower plate and a second half-mould fixed to the upper plate 25. Each first half-mould is aligned with the corresponding second half-mould along a moulding direction, which in the example shown is perpendicular to the plane of Figure 2.

The first half-mould may for example be a female half-mould, whereas the second half-mould may be a male half-mould.

At least one plate selected from the lower plate and the upper plate 25 is movable relative to the other plate selected from the upper plate 25 and the lower plate parallel to the moulding direction. Thanks to this movement, the moulds 116 are movable between the open position and the closed position. More specifically, depending on the position of the lower plate and the upper plate 25 relative to each other, all of the moulds 16 are simultaneously in the same position, for example in the open position or in the closed position.

In the example shown, the moulds 116 are positioned in a line 27, side by side. The line 27 may comprise a number of moulds 116 corresponding to the number of doses 9 which belong to a row 26 of doses 9 simultaneously cut on the sheet material 2 in the cutting unit 8.

In the example shown, in which in the cutting unit 8 rows 26 of doses 9 are cut each of which comprises six doses 9, the line 27 comprises six moulds 116 placed side by side.

The line 27 of moulds is straight and may be parallel to the feeding direction S, that is to say, to the rows 26 of doses 9. The apparatus 101 comprises a conveying device 121, schematically shown as a rectangle in Figure 2, for conveying the doses 9 from the cutting unit 8 to the pressing unit 114.

The conveying device 121 may comprise a plurality of conveying elements, each of which includes for example an arm and/or a suction cup and/or a pointed or other element. Each conveying element is configured to engage with a dose 9 in the cutting unit 8 and to bring the dose 9 to the corresponding mould 116, in which the dose 9 is released.

The moulds 116 positioned along the line 27 may be positioned at a pitch, that is to say, with a distance between their centres, greater than the pitch which the doses 9 have in a row 26 of doses 9 just cut in the cutting unit 8. That may be due to the dimensions of the moulds 116 and/or the opening/closing devices joined to the moulds 116.

In order to correctly position the doses 9 in the moulds 116, the conveying device 121 may act as a divaricator device, which increases the distance between two adjacent doses 9 from an initial value to a final value. The initial value corresponds to the pitch provided between two doses 9 in the cutting position P, as soon as the doses 9 have been cut by the cutting elements of the cutting unit 8. The final value corresponds to the distance between two adjacent doses 9 at the moment when the doses 9 are inserted into the respective moulds 116, that is to say, to the pitch or distance between two consecutive moulds 116 in the line 27.

The conveying elements included in the conveying device 121 may be configured to convey the doses 9 along respective trajectories T, for example straight, which fan out starting from a row 26 of doses 9 in the cutting unit 8. In other words, the trajectories T may be divergent, that is to say, they diverge starting from the cutting unit 8 towards the pressing unit 114. In this way the conveying device 121 acts like a divaricator device. The increase in the pitch or distance which occurs between two consecutive doses 9 shifting from the cutting unit 8 towards the pressing unit 114 depends on the type of object 10 to be formed and on the shape and structure of the moulds 116. For some objects 10 having a particularly simple geometry, which are formed inside moulds without complex mechanisms, the increase in the pitch may not be necessary. In this case, therefore there is no divaricator device, but a simple conveying device which conveys the doses 9 from the cutting unit 8 to the pressing unit 116 without acting on their distance.

The conveying device 121 is configured to convey the doses 9 along paths which extend transversally to the feeding direction S, both whether the conveying device 121 acts as a divaricator device, and whether it conveys the doses 9 without changing their distance from each other.

The apparatus 101 also comprises an extracting device 28, schematically shown as a rectangle in Figure 2, for extracting from the moulds 116 the objects 10 which were formed by pressing the doses 9. There may also be an outfeed conveyor 29, for example comprising a conveyor belt, positioned downstream of the extracting device 28 for carrying the objects 10 away from the forming apparatus 101.

The outfeed conveyor 29 may comprise a conveyor belt which conveys the objects 10 along an outfeed direction U parallel to the feeding direction S, but optionally in the opposite direction to the feeding direction S.

The extracting device 28 may comprise one or more extracting elements not shown, positioned for picking up the objects 10 from the moulds 116 and for placing the objects 10 on the outfeed conveyor 29.

In one embodiment, each extracting element may comprise an arm. The arms of the extracting device 28 may coincide with the arms which carry the doses 9 from the cutting unit 4 to the pressing unit 114. In this case, a single handling device, comprising for example one or more arms, acts both as the conveying device for conveying the doses 9 into the moulds 116, and as the extracting device for removing the objects 10 from the moulds 116.

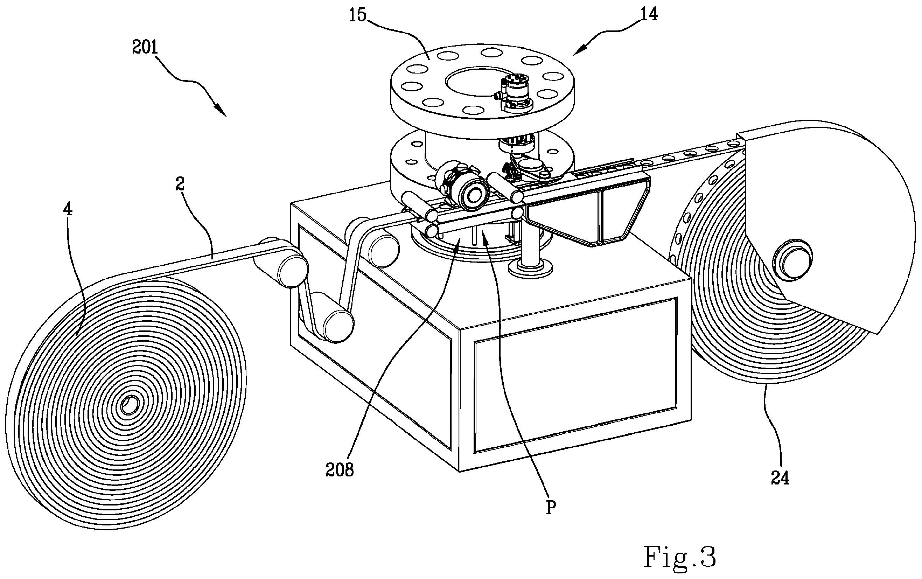

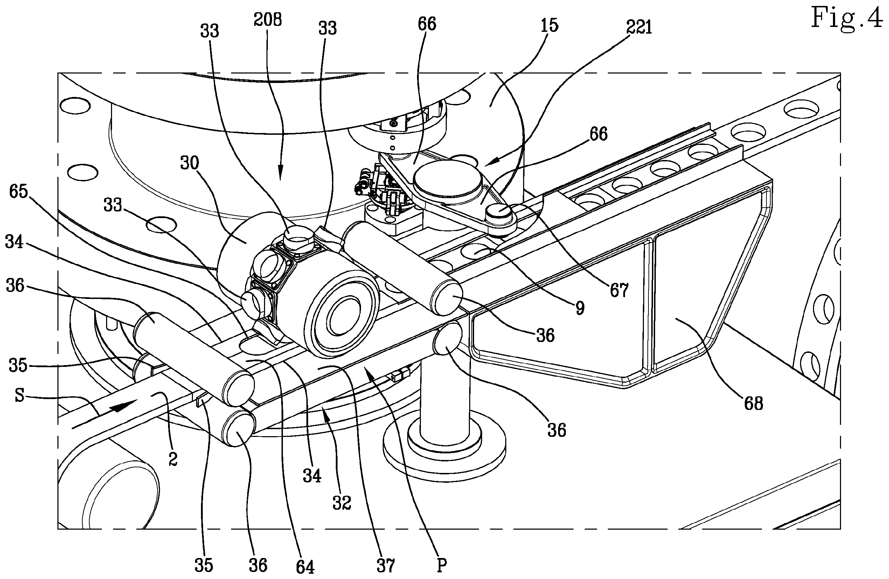

The forming apparatus 101 allows good productivity to be achieved without complicating the moulds 116 and by minimising the quantity of residual sheet material 2, that is to say, the sheet material 2 waste. Figure 3 shows a forming apparatus 201 according to another alternative embodiment, which differs from the embodiments shown in Figures 1 and 2 mainly because both the operations for cutting the doses 9 and the operations for forming the objects occur continuously. For that purpose, the forming apparatus 201 comprises a rotary cutting unit 208, positioned in the cutting position P and more visible in Figure 4. The cutting unit 208 comprises a cutting roller 30, continuously rotatable around its own longitudinal axis which, in the example shown, is positioned horizontally. On a cylindrical lateral surface of the cutting roller 30, there are one or more cutting members 33, shaped like protuberances or blades which project outwards from the cylindrical lateral surface, so as to penetrate the sheet material 2 and to cut the sheet material 2 so as to obtain the doses 9 from it.

The cutting unit 208 may also comprise a guiding device 32 for guiding the sheet material 2 and keeping it taut while the sheet material 2 interacts with the cutting roller 30.

The guiding device 32 may be positioned under the cutting roller 30.

The guiding device 32 may comprise two lateral guides 34 for guiding the sheet material 2 along a feeding direction S, along which the sheet material 2 is moved forward towards the cutting unit 208, after having been unwound from the reel 4.

The lateral guides 34 allow the sheet material 2 to be kept centred relative to the cutting members 33 provided on the cutting roller 30.

The lateral guides 34 may have respective converging initial stretches 35 so that the sheet material 2 can more easily be inserted between the lateral guides 34.

The guiding device 32 may also comprise two pairs of rollers 36. One of the pairs of rollers 36 is positioned upstream of the cutting roller 30, whilst the other pair of rollers 36 is positioned downstream of the cutting roller 30. Each pair of rollers 36 comprises a lower roller positioned under the sheet material 2 and an upper roller positioned over the sheet material 2, in such a way that the sheet material 2 passes between the lower roller and the upper roller of each pair of rollers 36.

The pairs of rollers 36 have a conveying function and move the sheet material 2 forward along the advancement direction F.

The pairs of rollers 36 also allow the sheet material 2 to be kept stretched out, preventing wrinkles from forming in the sheet material 2.

There may also be a supporting surface 37 for supporting the sheet material 2 while the sheet material 2 interacts with the cutting roller 30. The supporting surface 37 also helps to keep the sheet material 2 in a stretched out and undeformed configuration.

The supporting surface 37 may extend downstream of the cutting roller 30, for supporting the doses 9 after the latter have been cut from the sheet material 2.

The guiding device 32 may also comprise a covering element 64 positionable over the sheet material 2 to define, together with the supporting surface 37 and the lateral guides 34, a closed channel inside which the sheet material 2 is made to pass upstream of the cutting roller 30.

The covering element 64 has an opening 65 at least at the cutting roller 30, to render the sheet material 2 accessible to the cutting members 33. The opening 65 may continue downstream of the cutting roller 30.

Since the cutting roller 30 rotates continuously, the doses 9 are separated from the sheet material 2 continuously.

In the example shown, the sheet material 2 has a width slightly greater than the maximum transversal dimension of the doses 9, that is to say, in the example shown, than the diameter in plan view of the doses 9. In this way, in the example shown, a single row of doses 9 is cut from the sheet material 2.

In an embodiment not shown, the sheet material 2 could have a width, measured perpendicularly to the feeding direction S, greater than that shown in Figures 3 and 4, so that multiple rows of doses 9 can simultaneously be cut from the sheet material 2.

The residual sheet material 2, that is to say, from which the doses 9 were separated, is wound on an empty reel 24 so that it can subsequently be disposed of.

A suction device 68 may be provided downstream of the cutting unit 208 for keeping the residual sheet material 2, from which the doses 9 were separated, adhering to the supporting surface 37, while the residual sheet material 2 is conveyed towards the empty reel 24.

Downstream of the cutting unit 208 there is a pressing unit 14, which in the example shown includes a moulding carousel 15 similar to that shown in Figure 1. In Figures 3 and 4, the moulding carousel 15 is shown very schematically. However, it shall be understood that the moulding carousel 15 comprises a plurality of moulds, distributed along its periphery, each of which comprises a first half-mould (for example a female mould part) and a second half-mould (for example a male mould part) which are aligned with each other along a moulding direction. The first half-mould and the second half-mould are movable between the open position and the closed position, as previously described with reference to Figure 1, in such a way that, during a rotation of the moulding carousel 15, each mould passes from the open position to the closed position and returns to the open position, so as to receive a dose 9, to form an object and to allow the object formed to be extracted from the mould.

The moulding carousel 15 is continuously rotatable around its own axis of rotation Z. Pressing of the dose 9 to obtain the object therefore occurs continuously.

The forming apparatus 201 also comprises a conveying device 221, schematically shown in Figure 4, for conveying the doses 9 from the cutting unit 208 towards the pressing unit 14.

In the example shown, the conveying device 221 is of the rotary type and comprises at least one arm 66 to which a conveying element 67 for picking up the dose 9 from the supporting surface 37 and delivering the dose 9 to a mould is connected. In the example shown, there are two diametrically opposed arms 66. Mounted at one end of each arm 66 is a conveying element 67, which may comprise a pointed member, a pierced surface through which air is sucked and/or blown, a gripping element or the like. During operation, the sheet material 2 is continuously unwound from the reel 4 and conveyed along the feeding direction S until it reaches the cutting unit 208. Here the cutting roller 30, continuously rotating around its own longitudinal axis, interacts with the sheet material 2 and cuts the doses 9 along the respective perimeter. The doses 9 are then conveyed into the moulds by the conveying device 221 so that they can be pressed in order to obtain the desired objects, with a continuous forming process. In contrast, the residual sheet material 2 is wound on the empty reel 24 so that it can be disposed of and hopefully recycled.

In an alternative embodiment, in any of the Figures described above, the conveying device for conveying the doses from the cutting position to the forming region may comprise a robot arm.

In the examples described above, reference was always made to a sheet material 2 in the form of a continuous web unwound from a reel 4.

In an alternative embodiment not shown, the sheet material 2 may enter the forming apparatus 1 in the form of separate sheets, having a desired length.

In an alternative embodiment, the cutting unit may comprise a laser cutting device, in which for example a laser beam is moved along a predetermined path corresponding to the perimeter of the dose.

It is also possible to have a cutting unit comprising a water jet cutting device for separating the dose from the sheet material.

In one embodiment, one or more additives may be added to the natural fibre-based substance, for example in liquid form, in order to improve the properties of the object formed, for example the resistance to water, to greases or to gases.

The additives may be applied on the sheet material before cutting the doses, in particular upstream of the cutting unit. It is also possible to add the additives in the cutting unit, that is to say, while the doses are separated from the sheet material.

Alternatively, the additives can be applied on the doses after the latter have been separated from the sheet material, that is to say, downstream of the cutting unit.

Therefore, it is possible to have an applicating device, for example a sprayer, positioned in any position between the inlet for the sheet material and the pressing unit, for applying one or more additives on the natural fibre-based substance.

In one embodiment, downstream of the moulding unit there may be a thermal treatment device and/or a radiation applying device, configured to subject the object formed to a thermal treatment, in particular a heating to a predetermined temperature, and/or to apply radiation to the object formed. The aim of the thermal treatment or of the radiation is to fix and render functional the additives previously added to the natural fibre-based material.

In one embodiment, applicable to all of the forming apparatuses described herein, there may be a pre-forming step for performing a preliminary forming of the dose 9 before the dose 9 is pressed in the pressing unit to obtain the desired object.

More specifically, it is possible to perform a pre-forming operation on the dose 9, which gives the dose 9 a concave shape not yet coincident with the definitive shape of the object formed. That makes it easier to insert the dose into the mould and makes stretching and deforming of the material of the dose more gradual and less critical.

The pre-forming step can be carried out in the cutting unit, since the cutting elements or the cutting members provided in the cutting unit can deform the dose while the latter is cut. Alternatively, the pre-forming step can be carried out downstream of the cutting unit, before inserting the dose into the mould. For example, a conveying element which conveys the dose could, when it engages with the dose, apply to it a force sufficient to deform it, giving it a preliminary concave shape.

Alternatively or in addition to the pre-forming step, it is possible to subject the dose to a localised compression operation, for example in order to define in the dose one or more zones, for example linear or punctiform, in which the material of the dose was deformed by pressing it. The aim of this may be to facilitate deformation of the natural fibre-based substance when the dose is pressed in the pressing unit, since the material tends to bend at the most compressed zones.

Even the localised compression operation may be carried out in the cutting unit or downstream of the cutting unit, before inserting the dose into the mould, for example while the dose is conveyed from the cutting unit to the pressing unit.

Figures 5 to 10 shown an example of a mould 16 which may be used to obtain the object from a dose formed with the natural fibre-based substance. In the example shown, the object has a concave shape and comprises a cup-shaped body.

The mould 16 comprises the first half-mould 17 which, in the example shown, is a female mould part 44. The mould 16 also comprises the second half-mould 18 which, in the example shown, is a male mould part 45. The first half-mould 17 and the second half-mould 18 are aligned along the moulding axis D and are movable relative to each other along the moulding direction D1 parallel to the moulding axis D.

The mould 16 has a forming zone 46, in which the dose 9 is shaped to obtain the object. The forming zone 46 has a volume which can be gradually reduced from the moment when the forming zone 46 receives the dose 9, until the moment when the object is obtained. The forming zone 46 is therefore a variable-volume forming zone.

The female part 44 comprises a plurality of sectors 47, for example four sectors 47, suitable for defining a lateral surface of the forming zone 46. Each sector 47 is in contact with two adjacent sectors 47.

The sectors 47 are slidable in contact with a transversal element 48 which defines a transversal surface of the forming zone 46, that is to say, a surface of the forming zone 46 which extends transversally to the moulding direction D1.

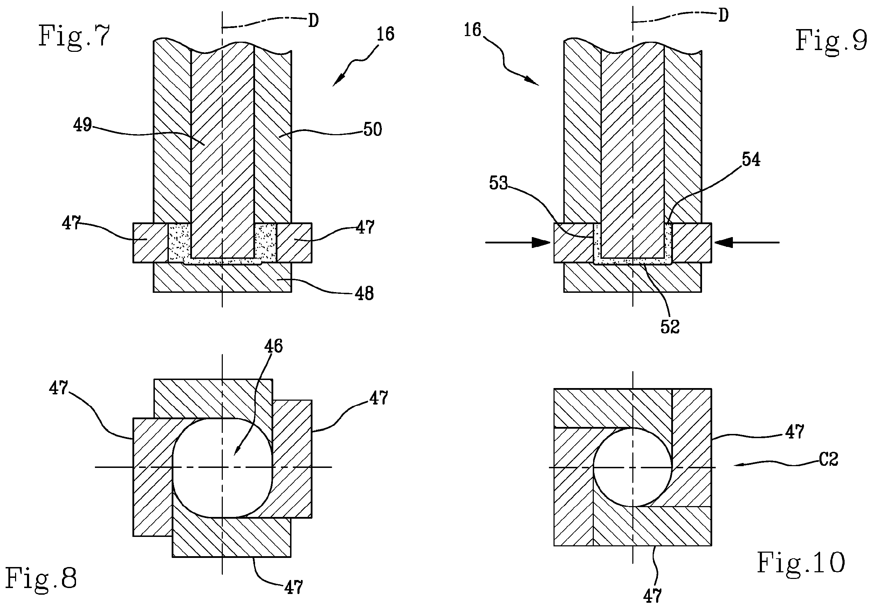

In particular, the sectors 47 are slidable for passing from an initial position, shown in Figures 5 and 6, to a final position, shown in Figures 9 and 10.

Figures 7 and 8 show an intermediate position which the sectors 47 reach between the initial position and the final position.

The sectors 47 can move under the action of one or more external actuators. In particular, each sector 47 can move as a result of the force applied on it by a respective external actuator and simultaneously of the force applied on it by an adjacent sector 47.

In one embodiment, connected to each sector 47 there is a respective external actuator, which may be of the mechanical, hydraulic, electric, pneumatic or other type, which moves the sector 47 towards a central zone of the forming zone 46 along a first thrust direction. For example, considering the sector 47 shown at the bottom in Figure 6, the first thrust direction is indicated with G1. Each sector 47 is also moved by an adjacent sector 47 towards the central zone of the forming zone 46 along a second thrust direction positioned transversally to the first thrust direction. Considering the sector 47 shown at the bottom in Figure 6, the second thrust direction is indicated with G2. In the example shown, in which there are four sectors 47 present, the first thrust direction is perpendicular to the second thrust direction. The arrangement of the first thrust direction and of the second thrust direction relative to each other may be different depending on the number of sectors 47 present in the mould 16.

From the combination of the forces acting on each sector 47, directed respectively along the first thrust direction and along the second thrust direction, each sector 47 moves towards the central zone of the forming zone 46 along a movement line angled relative to the first thrust direction and relative to the second thrust direction. In the example shown, in which four sectors 47 are present, each sector 47 moves towards the central zone of the forming zone 46 along a movement line which is at a 45° angle relative to the first thrust direction and to the second thrust direction.

In this way the sectors 47 simultaneously move towards the central zone of the forming zone 46 to form the object, with a movement similar to the closing movement of the parts which make up the diaphragm of a camera. The male part 45 comprises a punch 49, which extends along the moulding axis D and is positioned to penetrate the forming zone 46 so as to shape the object from the inside.

On the outside of the punch 49 there is a tubular element 50, relative to which the punch 49 may be slidable.

The actuating device allows the female part 44 and the male part 45 to be moved relative to each other, so that the female part 44 and the male part 45 move towards each other to form the object or alternatively they move away from each other to allow the object formed to be removed from the mould 16.

During operation, the female part 44 and the male part 45 are initially located in a position at a distance from each other, in which the dose 9 is inserted into the forming zone 46.

The sectors 47 are positioned in the initial position, in which they define an expanded configuration C1 of the forming zone 46. The sectors 47 therefore delimit a forming zone 46 having a relatively large volume, which is capable of receiving a natural fibre-based substance, of which the dose 9 consists, having a relatively low density, which consequently occupies a lot of space.

The female part 44 and the male part 45 are moved towards each other until the tubular element 50 abuts against the sectors 47, as shown in Figure 5. When that happens, between the female part 44 and the male part 45 a closed forming chamber 51 is defined, having a volume much greater than the final volume of the object.

The punch 49 is initially in a back position, in which it does not project from the tubular element 50, as shown in Figure 5.

Then, the punch 49 penetrates the forming zone 46 and moves towards the transversal element 48, until it is positioned at a distance from the transversal element 48 which is substantially equal to the thickness of an end wall 52 of the object, as shown in Figures 7 and 8.

In this way the natural fibre-based substance of which the dose 9 consists is compressed into the end wall 52.

The sectors 47, which until this moment were in the first position, corresponding to the expanded configuration C1 of the forming zone 46, now begin to move towards each other. In this way the second position of the sectors 47 is reached, shown in Figures 7 and 8, corresponding to a final configuration C2 of the forming chamber 51. In this configuration, the sectors 47 are positioned at a distance from the punch 49 which corresponds to the thickness of a lateral wall 53 of the object. In this way, the lateral wall 53 is compressed, thanks to the interaction between the sectors 47 and a lateral portion of the punch 49.

A free edge 54 of the lateral wall 53 is formed as a result of the interaction between the dose 9 and a surface portion of the tubular element 50.

The object formed in this way can now be extracted from the mould.

In an alternative embodiment, the mould 16 may pass from the initial position shown in Figures 5 and 6 to the final position shown in Figures 9 and 10 even by following a sequence of movements different from that described above, for example by moving the punch 49 towards the transversal element 48 before moving the sectors 47 or even simultaneously.

The mould 16 allows a high degree of compaction of the natural fibre-based substance to be obtained.

Thanks to the movement of the sectors 47 towards the punch 49 and thanks to the punch 49 and to the transversal element 48 which are movable towards each other, it is possible to perform a kind of isostatic compressing, in which the compressing force is applied to the natural fibre-based substance in a substantially uniform way along different lines. Figures 11 and 12 show the female part 44 of the mould 16 visible in Figures 5 to 10, into which a dose 9 was inserted, the dose having a substantially cylindrical shape, in particular having the shape of a cylinder in which the height is less than the diameter of the base.

In Figures 11 and 12, the sectors 47 are positioned in the initial position, in which they define an expanded configuration C1 of the forming zone 46. The dose 9 has a maximum transversal dimension W which is less than a minimum transversal dimension W1 of the forming zone 46, in the expanded configuration C1.

In the example shown, the maximum transversal dimension W is a diameter of the dose 9, in a plan view. The minimum transversal dimension W1 is the minimum distance between opposite lateral surfaces of the forming zone 46, in a plan view and in the expanded configuration C1.

Since the maximum transversal dimension W of the dose 9 is less than the minimum transversal dimension W1 of the forming zone 46, the dose 9 can enter the forming zone 46 until it makes contact with the transversal element 48 and can rest on the latter, without interfering with the sectors 47, in particular without touching the sectors 47.

Therefore, the dose 9 can be entirely received in the forming zone 46, in the expanded configuration C1, without being prematurely deformed. Moreover, the risk of waste being created due to the fact that parts of the dose 9 remain outside the forming zone 46 is substantially eliminated. Then, the dose 9 is compressed to obtain the desired object, thanks to the movement of the sectors 47 and to the interaction between the female part 44 and the male part 45.

Figures 13 and 14 show the female part 44 of the mould 16, which has just received a dose 309 having a shape different from the shape of the dose 9 shown in Figures 11 and 12. More specifically, the dose 309 has the shape of a parallelepiped. In the example shown, the dose 309 has the shape of a parallelepiped whose height is less than the dimensions of the base, that is to say, less than the length and the width of the base, which may even be equal to each other.

The transversal dimensions of the dose 309, that is to say, the length L1 and the width L2 of the relative base, are greater than the minimum transversal dimension W1 of the forming zone 46, in the expanded configuration C1. For this reason, when the dose 309 is released between the female part 44 and the male part 45 of the mould 16, the dose 309 rests on an upper surface 55 of the sectors 47 at a distance from the transversal element 48, which defines a bottom of the forming zone 46.

Then, thanks to the interaction with the male part of the mould 16, the natural fibre-based substance of which the dose 309 consists enters the forming zone 46 to be compressed and create the desired object.

The dose 309 is particularly easy to obtain, because it can be made by simply cutting a sheet material, without generating waste.

On the other hand, when using a dose 309 in the shape of a parallelepiped, depending on the shape of the object it may be necessary to act on the moulded object to remove any waste.

In general, the dose which is processed in any of the forming apparatuses or the moulds described herein, may have any desired shape. More specifically, as well as having a shape in plan view which is circular or quadrilateral as previously described, the dose may generically have a polygonal shape in plan view, for example hexagonal or pentagonal. Figures 15 and 16 show a first half-mould, which in the example shown is a female half-mould or female mould part 144 according to an alternative embodiment. The female part 144 comprises a plurality of sectors 147 similar to the sectors 47 described with reference to Figures 5 to 10, the sectors 147 being movable as already described with reference to the sectors 47.

The sectors 147 shown in Figures 15 and 16 differ from the sectors 47 mainly because, in an upper region of them, they are provided with a step 56. The steps 56 of the sectors 147, taken as a whole, define a receiving space 57 intended to temporarily receive the dose 9 when the latter is released in the mould, before the dose 9 is compressed as a result of the interaction between the female part 144 and the corresponding male part or male half-mould.

The receiving space 57 is delimited by a contact surface 58 positioned transversally to the moulding direction D1, that is to say, positioned transversally to the moulding axis D which is parallel to the moulding direction D1. In particular, the contact surface 58 may be positioned perpendicularly to the moulding direction D1.

In the example shown, in which the moulding direction D1 is substantially vertical, the contact surface 58 may be substantially horizontal.

The contact surface 58 is positioned to receive the dose 9 resting on it when the dose is released in the mould.

The receiving space 57 is also delimited by a containment surface 59 which extends transversally, for example perpendicularly, to the contact surface 58. In the example shown, the containment surface 59 is substantially vertical. As will be described in more detail below, the containment surface 59 is intended to laterally contain the dose 9. The containment surface 59 and the contact surface 58 together define the steps 56.

The female part 144 has a cavity 60 for forming the object starting from the dose 9. In the example shown, in which the female part 144 is positioned under the male part, the cavity 60 is open upwards and is delimited by a bottom surface 61. The bottom surface 61 extends transversally to the moulding direction D1.

The receiving space 57 is positioned over the cavity 60.

The contact surface 58 is at a distance from the bottom surface 61.

In a plan view, the receiving space 57 has a shape similar to the shape of the dose 9.

In the example shown, in which the dose 9 has the shape of a cylinder with a height which is less than the base diameter, the receiving space 57 has a circular shape in plan view, at least when the sectors 147 are positioned in the first position corresponding to the expanded configuration C1 of the forming zone 46.

If the dose 9 has a shape which is not circular in plan view, the shape of the receiving space 57 in plan view is also consequently different and is consistent with the geometry of the dose 9.

The transversal dimensions of the receiving space 57, that is to say, the dimensions of the receiving space 57 perpendicularly to the moulding direction D1, are greater than the corresponding dimensions of the dose 9.

For example, if the dose 9 has a cylindrical shape, the base diameter of the dose 9 is less than the diameter, in plan view, of the receiving space 57. In this way the dose 9 can be housed in the receiving space 57 without being subjected to unwanted deformations.

In particular, in the example shown, the dimensions of the receiving space 57 transversally to the moulding direction D1, for example the diameter of the receiving space 57, are very close to the transversal dimensions (in particular base diameter) of the dose 9, and only slightly greater than the latter.

The dose 9 is released between the female part 144 and the corresponding male part while the sectors 147 are in the position corresponding to the expanded configuration C1. The dose 9 rests on the contact surface 58 and remains at a distance from the bottom surface 61 of the cavity 60. The dose 9 is at least partly housed in the receiving space 57, from which an upper portion of it may project, even if this condition is not necessary. The containment surface 59 acts as a containment device to prevent lateral shifting of the dose 9, that is to say, to prevent the dose 9 from shifting in an unwanted way transversally to the moulding direction D1.

When the sectors 147 move towards the centre of the mould, that is to say, towards the moulding axis D1, the volume of the forming zone 46 is gradually reduced, as already described with reference to Figures 5 to 10. The receiving space 57 is also gradually reduced, while the dose 9 is pushed into the cavity 60 towards the bottom surface 61.

The containment surface 59, whose transversal dimensions are gradually reduced, continues to prevent unwanted lateral shifting of the dose 9 while the latter is pressed. Moreover the containment surface 59 ensures that the dose 9 is inserted into the cavity 60 in a centred way, so that an axis of the dose 9 (or a central region of the dose 9, if the latter has a geometry that is not axisymmetric) substantially coincides with the moulding axis D1. That improves the quality of the object formed, since the defects linked to incorrect dose 9 positioning in the mould are minimised.

Therefore, in the example shown, the containment surface 59 has a dose 9 centring function, as well as having a dose 9 lateral containment function.

In an alternative embodiment, the containment surface 59 may only have the dose 9 lateral containment function, that is to say, to prevent unwanted shifting of the dose 9 transversally to the moulding direction D1, without having centring functions. In the latter case, the transversal dimensions of the receiving space 57 may be greater than shown in Figures 15 and 16, that is to say, there may be a bigger difference between the transversal dimensions of the receiving space 57 and the transversal dimensions of the dose 9 than is shown in Figures 15 and 16.

Therefore, the containment surface 59 acts as a containment device, which in the case in question comprises a plurality of containment elements, defined by the portions of the sectors 147 in which the steps 56 are made. The containment elements are therefore made integral with the sectors 147 and define movable parts, which are shiftable transversally to the moulding direction D1 for pushing the dose 9 towards a central zone of the mould, in particular towards the moulding axis D.

The contact surface 58 and the containment surface 59 may be outside the forming zone 46. More generally, the contact surface 58 and the containment surface 59 may be separate from a contact forming surface used to shape the dose 9. In this case, the contact surface 58 and the containment surface 59 have a dose 9 containment function and if necessary a dose 9 centring function, but they do not contribute to forming the object.

In the example shown in Figures 15 and 16, the containment surface 59 extends 360° around the moulding axis D, that is to say, it extends continuously around a lateral edge of the dose 9. However, this condition is not necessary, since the containment surface 59 could extend around the moulding axis D by less than 360°, as shown in Figure 17.

Figure 17 shows a first half-mould, which in the example shown includes a female half-mould or female part 244 comprising a plurality of sectors 47 similar to the sectors 47 shown in Figures 5 to 10. There is also a plurality of containment elements 62 for laterally containing the dose 9.

More specifically, joined to each sector 47 is a containment element 62, which is fixed relative to the corresponding sector 47. In particular, each containment element 62 may be fixed to an upper surface of the corresponding sector 47. Each containment element 62 is delimited by a lateral surface 63 directed towards the moulding axis D. Each lateral surface 63 may be a cylindrical surface portion, or a substantially flat and vertical surface, or even have other shapes.

In the example shown and in plan view, the lateral surfaces 63 define an inscribed circle K indicated with the broken line in Figure 17. The circle K has a diameter slightly greater than the base diameter of the dose 9, which in the example shown is cylindrical.

The lateral surfaces 63 laterally delimit the receiving space 57, that is to say, they delimit the receiving space 57 around the moulding axis D.

The contact surface 58, which delimits the bottom of the receiving space 57, that is to say, transversally to the moulding direction D1, is in contrast defined by a portion of upper surface of the sectors 47.

The ways in which the mould including the female part 244 operates are similar to the ways in which the mould including the female part 144 shown in Figures 15 and 16 operates. The contact elements 62, although only interacting with the dose 9 in predetermined angular positions around the moulding axis D, prevent unwanted shifting of the dose 9 transversally to the moulding direction D1, after the dose 9 has come to rest on the contact surface 58. Moreover, as the sectors 47 and with them the containment elements 62 gradually move towards the moulding axis D, the containment elements 62 push the dose 9 in a centred way towards the centre of the cavity 60, in such a way as to prevent the dose 9 from being positioned in the cavity 60 in a position which is not centred.

The centring function of the containment elements 62 may be absent if the diameter of the circle inscribed in the containment surfaces 59 is sufficiently greater than the dimensions of the dose 9 transversally to the moulding direction D1.

Figure 18 shows, in a plan view, a first half-mould, which in the example shown is a female half-mould or female mould part 344, having a cavity 360 whose dimensions are fixed, transversally to the moulding direction D1. That is to say, the cavity 360 has a lateral wall, extending around the moulding axis D, with constant dimensions and shape. The sectors 47, which in the previous embodiments allowed a change in the volume of the forming region, are absent in the embodiment of Figure 18.

In contrast, there is a plurality of containment elements 362, for defining a receiving space 57 over the cavity 360. The receiving space 57 is delimited by the contact surface 58, positioned transversally to the moulding direction D1, and which in the example shown is the upper surface of the female part 344. The receiving space 57 is also delimited by a containment surface defined by the lateral surface 63 of each containment element 362.

The containment elements 362 are movable parts which can move towards a central zone of the mould. More specifically, the containment elements 362 are movable as indicated by the arrows F1 towards the moulding axis, so as to gradually reduce the dimensions of the receiving space 57 in order to position the dose 9 in a centred way in the cavity 360. The moulds shown in Figures 5 to 18 are examples of moulds which may be used in the forming apparatuses shown in Figures 1 to 4. However, in the forming apparatuses shown in Figures 1 to 4, it is also possible to use moulds having a structure different from those shown in Figures 5 to 18, for example traditional moulds in which the female mould part has a cavity with constant shape and dimensions.

In one embodiment not shown, it is possible to trim the dose, whatever its shape, after the dose has been cut and separated from the sheet material.

More specifically, the dose can be trimmed downstream of the cutting unit, for example in any position of the path of the dose from the cutting unit to the pressing unit. It is also possible to trim the dose in the mould.

Dose trimming is a cutting operation, by means of which limited quantities of natural fibre-based substance near the edges of the dose are removed, so as to improve the cutting precision and reduce the variability of dose dimensions between one dose and another.

In another embodiment not shown, it is possible to trim the moulded object, directly in the mould or downstream of the pressing unit.

Trimming the object allows improvement of the quality of the edges of the object, increasing the precision of its dimensions and eliminating any excess natural fibre-based substance, particularly if the dose and the moulded object have shapes which are different from each other in plan view.

Trimming the dose or the moulded object involves removing small quantities of natural fibre-based substance, which may be done without excessively complicating the structure of the forming apparatus. Moreover, the moulds shown in Figures 5 to 18 may also be used inside forming apparatuses different from those shown in Figures 1 to 4. In particular, the moulds shown in Figures 5 to 18 can also be used in forming apparatuses which are fed with doses which have been made outside the forming apparatus. More specifically, the moulds shown in Figures 5 to 18 can be used inside forming apparatuses in which dose 9 cutting from the sheet material is not in line with the forming.

Further features of some aspects of the invention are set out in the numbered clauses below.

Clause 1: Method for forming a three-dimensional object (10) in a forming apparatus (1; 101; 201), wherein a natural fibre-based substance in the form of a sheet material (2) enters the forming apparatus through an inlet (3) and wherein a three-dimensional object (10) made with the natural fibre-based substance exits the forming apparatus through an outlet (6), a path (7) connecting the inlet (3) and the outlet (6), wherein the sheet material (2) is cut in a cutting unit (8; 208) positioned along said path (7), in order to separate a dose (9; 309) of natural fibre-based substance from the sheet material (2), and wherein the three-dimensional object (10) is formed by pressing the dose (9; 309) between a female half-mould (17) and a male half-mould (18) of a pressing unit (14; 114), the pressing unit (14; 114) being positioned along said path (7) downstream of the cutting unit (8; 208).

Clause 2: Method according to clause 1, and further comprising the step of conveying the dose (9; 309) from the cutting unit (8; 208) to the pressing unit (14; 114).

Clause 3: Method according to clause 1 or 2, wherein, in a single cutting operation, the cutting unit (8; 208) cuts on the sheet material (2) a plurality of doses (9; 309) arranged in a row (26) with a preset pitch.

Clause 4: Method according to any one of clauses 1 to 3, wherein the pressing unit (114) comprises a plurality of moulds (116) arranged in a line (27) with a predetermined pitch.

Clause 5: Method according to clause 4, as appended to clause 3, wherein the pitch of the doses (9; 309) along said row (26) is less than the pitch of the moulds (116) along said line (27), the method comprising the step of increasing the pitch between the doses (9; 309) while the doses (9; 309) are conveyed towards the moulds (116) so as to bring each dose (9; 309) to a mould (116).

Clause 6: Method according to any one of clauses 1 to 5, wherein a plurality of rows (26) of doses (9; 309) are cut in the cutting unit (8; 208) in a single cutting operation, the rows (26) of doses (9; 309) being parallel to each other, and wherein optionally two adjacent rows (26) of doses (9; 309) are offset from each other to minimise waste of sheet material (2). Clause 7: Method according to any one of clauses 1 to 6, wherein the cutting unit (8; 208) comprises at least one cutting element supported by a cutting block (11), and wherein the cutting block (11) moves along a direction transversal to a plane in which the sheet material (2) lies in the cutting unit (8; 208), so as to bring the cutting element into contact with the sheet material (2) to cut the dose (9; 309) or alternatively so as to disengage the cutting element from the sheet material (2).

Clause 8: Method according to any one of clauses 1 to 6, wherein the cutting unit (8; 208) comprises a cutting roller (30) which supports at least one cutting member (33) and is rotatable around an axis thereof to make the cutting member (33) interact with the sheet material (2).

Clause 9: Method according to any one of clauses 1 to 8, wherein the pressing unit (14; 114) comprises at least one mould (16) which includes the female half-mould (17) and the male half-mould (18), and wherein at least one half-mould selected from the female half-mould (17) and the male half-mould (18) is movable along a moulding direction (D1) relative to the other half-mould selected from the male half-mould (18) and the female half-mould (17), so that the mould (16) is displaceable between an open position and a closed position.

Clause 10. Method according to clause 9, wherein a plurality of moulds (16) is provided in the pressing unit (14; 114), the moulds (16) being supported by a moulding carousel (15), each mould (16) being movable between the open position and the closed position while the moulding carousel (15) rotates around an axis of rotation (Z) thereof.

Clause 11: Method according to clause 9, wherein the pressing unit (114) comprises a first plate which supports a plurality of female half-moulds and a second plate (25) which supports a plurality of male half-moulds, at least one plate selected from the first plate and the second plate (25) being movable linearly relative to the other plate selected from the second plate (25) and the first plate for pressing the doses (9; 309).

Clause 12. Method according to any one of clauses 9 to 11, wherein a variable-volume forming zone (46) is defined between the female half-mould (17) and the male half-mould (18), and wherein the volume of the forming zone (46) is reduced to form the three-dimensional object (10), by moving transversally to the moulding direction (D1) a plurality of sectors (47; 147) included in a half-mould selected from the female half-mould (17) and the male half-mould (18).

Clause 13: Method according to any one of clauses 9 to 12, wherein the female half-mould (17) comprises a cavity (60; 360) and wherein the dose (9; 309) is positioned in a receiving space (57) defined over the cavity (60; 360), between a plurality of containment elements (62; 147; 362), the method further comprising the step of moving the containment elements (62; 147; 362) towards a central zone of the receiving space (57) transversally to the moulding direction (D1) for centring the dose (9; 309) relative to the cavity (60; 360).

Clause 14: Method according to any one of clauses 1 to 13, wherein the natural fibre-based substance is a cellulose-based substance.

Clause 15: Method according to any one of clauses 1 to 14, wherein the dose (9) has the shape of a circular disk, or has a polygonal shape in plan view.

Clause 16: Method according to any one of clauses 1 to 15, wherein the dose (9; 309) is subjected to a preliminary treatment upstream of the pressing unit (14; 114), the preliminary treatment being selected in a group comprising: pre-forming the dose (9; 309) upstream of the pressing unit (14; 114) to give the dose (9; 309) a concave shape, locally compressing at least one zone of the dose (9; 309).

Clause 17: Method according to any one of clauses 1 to 16, wherein a starting material made with the natural fibre-based substance enters the forming apparatus (1; 101; 201), upstream of the cutting unit (8; 208) a defibration unit being provided in which the starting material is broken up into fibres, a compacting unit being provided downstream of the defibration unit for compacting the fibres coming out of the defibration unit and obtaining the sheet material (2), which has a density lower than the density of the starting material.

Clause 18: Forming apparatus for forming a three-dimensional object (10) with a natural fibre-based substance, comprising an inlet (3) for the natural fibre-based substance in the form of a sheet material (2), an outlet (6) for the three-dimensional object (10) made with the natural fibre-based substance, wherein a path (7) connects the inlet (3) and the outlet (6), the forming apparatus further comprising a cutting unit (8; 208) positioned along said path (7) for cutting the sheet material (2) in order to separate from the sheet material (2) a dose (9; 309) of natural fibre-based substance, a pressing unit (14; 114) being positioned along said path (7) downstream of the cutting unit (8; 208) for forming the three-dimensional object (10) by pressing the dose (9; 309) between a female half-mould (17) and a male half-mould (18) included in the pressing unit (14; 114).

Clause 19: Apparatus according to clause 18, and further comprising a conveying device (21; 121; 221) for conveying the dose (9; 309) from the cutting unit (8; 208) to the pressing unit (14; 114).

Clause 20: Apparatus according to clause 19, wherein the conveying device (121) comprises a divaricator device for increasing pitch between the doses (9; 309) from an initial value which the pitch between the doses (9; 309) has in the cutting unit (8) to a final value which the pitch between the doses (9; 309) has in the pressing unit (114).

## Claims

1. Method for forming an object (10) in a mould by compressing a dose (9; 309) made with a natural fibre-based substance, the mould comprising a male half-mould and a female half-mould (144; 244; 344) which includes a cavity (60; 360), at least one half-mould selected from the female half-mould (144; 244; 344) and the male half-mould being movable along a moulding direction (D1) relative to the other half-mould selected from the male half-mould and the female half-mould (144; 244; 344), the method comprising the steps of inserting the dose (9; 309) into the mould and compressing the dose (9; 309) to form the object (10), wherein the step of inserting the dose (9; 309) into the mould comprises positioning the dose (9; 309) in a receiving space (57) over the cavity (60; 360), so that the dose (9; 309) rests on a contact surface (58) which delimits the bottom of the receiving space (57) and is at a distance from a bottom surface (61) of the cavity (60; 360), the mould further comprising a containment device which laterally delimits the receiving space (57), wherein the containment device comprises a plurality of movable parts which move transversally to the moulding direction (D1) for pushing the dose (9; 309) towards a central zone of the mould.

2. Method according to claim 1, wherein the containment device comprises a plurality of containment elements (62; 362) which define the movable parts of said plurality of movable parts, and wherein the containment elements (62; 362) move towards the central zone of the mould after the dose (9; 309) has come to rest on the contact surface (58), so that the dose (9; 309) is centred in the cavity (60; 360).

3. Method according to claim 2, wherein the cavity (360) has constant shape and dimensions, the containment elements (362) being movable over the cavity (360) transversally to the moulding direction (D1).

4. Method according to claim 1 or 2, wherein the cavity (60) has a variable-volume forming zone (46) delimited by a plurality of sectors (47; 147) which are movable transversally to the moulding direction (D1) for reducing the volume of the forming zone (46), the movable parts of said plurality of movable parts being coincident with the sectors (47; 147) of said plurality of sectors (47; 147).

5. Method according to claim 4, as appended to claim 3, wherein each containment element (62) is fixed relative to a sector (47; 147) of said plurality of sectors (47; 147).

6. Method according to any one of claims 1 to 5, wherein the receiving space (57) is delimited by a containment surface for laterally containing the dose (9; 309), the containment surface extending continuously around the central zone.

7. Method according to any one of claims 1 to 5, wherein the receiving space (57) is delimited by a containment surface for laterally containing the dose (9; 309), the containment surface extending around the central zone by an angle which is less than 360°.

8. Mould for forming an object (10) by compressing a dose (9; 309) made with a natural fibre-based substance, the mould comprising a male half-mould and a female half-mould (144; 244; 344) which includes a cavity (60; 360), at least one half-mould selected from the female half-mould (144; 244; 344) and the male half-mould being movable along a moulding direction (D1) relative to the other half-mould selected from the male half-mould and the female half-mould (144; 244; 344), wherein a receiving space (57) is defined over the cavity (60) for receiving the dose (9; 309), the mould further comprising a containment device which laterally delimits the receiving space (57), the bottom of the receiving space (57) being delimited by a contact surface (58) which is intended to receive the dose (9; 309) resting on it and is at a distance from a bottom surface (61) of the cavity (60; 360), wherein the containment device comprises a plurality of movable parts, which are movable transversally to the moulding direction (D1) for pushing the dose (9; 309) towards a central zone of the mould.

9. Mould according to claim 8, wherein the containment device comprises a plurality of containment elements (62; 362) which define the movable parts of said plurality of movable parts, and wherein the containment elements (62; 362) are movable towards the central zone of the mould after the dose (9; 309) has come to rest on the contact surface (58), so that the dose (9; 309) is centred in the cavity (60; 360).

10. Mould according to claim 9, wherein the cavity (360) has constant shape and dimensions, the containment elements (362) being movable over the cavity (360) transversally to the moulding direction (D1).

11. Mould according to claim 8 or 9, wherein the cavity (60) has a variable-volume forming zone (46) delimited by a plurality of sectors (47; 147) which are movable transversally to the moulding direction (D1) for reducing the volume of the forming zone (46), the movable parts of said plurality of movable parts being coincident with the sectors (47; 147) of said plurality of sectors (47; 147).

12. Mould according to claim 11, as appended to claim 9, wherein each containment element (62) is fixed relative to a sector (47; 147) of said plurality of sectors (47; 147).

13. Mould according to any one of claims 8 to 12, wherein the receiving space (57) is delimited by a containment surface for laterally containing the dose (9; 309), the containment surface extending continuously around the central zone.

14. Mould according to any one of claims 8 to 12, wherein the receiving space (57) is delimited by a containment surface for laterally containing the dose (9; 309), the containment surface extending around the central zone by an angle which is less than 360°.
